Europäisches Patentamt

European Patent Office

Office européen des brevets

(19)

(11) Numéro de publication: **0 162 998**

**A1**

(12)

# DEMANDE DE BREVET EUROPEEN

(21) Numéro de dépôt: 84870066.2

(22) Date de dépôt: 29.05.84

(51) Int. Cl.⁴: **B 01 D 25/12**
**B 30 B 9/22**

(43) Date de publication de la demande:
04.12.85 Bulletin 85/49

(84) Etats contractants désignés:
AT BE CH DE FR GB IT LI NL SE

(71) Demandeur: **Parmentier, Alfred Henri**
**69, Boulevard Edmond Machtens B6**
**B-1080 Bruxelles(BE)**

(72) Inventeur: **Parmentier, Alfred Henri**
**69, Boulevard Edmond Machtens B6**
**B-1080 Bruxelles(BE)**

(54) **Membranes et plateaux pour filtres-presses.**

(57) Un plateau (1) comporte deux logements (2) pour deux membranes (3) cannelées ou pastillées. Elles ne sont pas serrées entre les surfaces de contact (4) des plateaux/cadres ou des plateaux chambrés. Chaque logement (2) est limité à l'encadrement périphérique du plateau (1) correspondant aux dites surfaces. Chaque membrane est fixée par un dispositif (9–11–13) formant des cannelures pour l'évacuation des filtrats. Les filtres-presses actuels, en particulier ceux à axe vertical, n'ont qu'un tissu filtrant utile et une membrane par plateau. Les moyens selon l'invention en utilisent deux et deux, ce qui diminue de moitié environ, le temps de filtration et les temps de compression des gâteaux filtrés, dans de nombreuses industries.

FIG. VI

EP 0 162 998 A1

## MEMBRANES et PLATEAUX pour FILTRES-PRESSES.

La présente invention concerne les filtres-presses utilisés pour séparer la phase solide de la phase liquide ⌐ d'une bouillie.

Ces filtres sont à axe horizontal (plateaux verticaux) ou à axe vertical (plateaux horizontaux). Ils sont à plateaux et cadres ou à plateaux "chambrés" ( la chambre remplaçant une demi-épaisseur d'un cadre, dans un plateau plus épais) Les filtres-presses modernes utilisent des membranes expansibles sous la pression d'un fluide (air, eau..) pour comprimer les gâteaux filtrés, afin d'en expulser au maximum la phase liquide avant leur lavage; lui-même suivi d'une compression pour assécher ces gâteaux le plus possible.

Les membranes sont en caoutchouc élastique ou autre élastomère.En général,elles portent en surépaisseur sur un côté,des cannelures ou des "pastilles",dans les intervalles desquels entrent les filtrats pour être évacués.

Dans l'état actuel de la technique,la membrane est serrée entre les surfaces de contact entre les plateaux/cadres ou les plateaux chambrés,soit les surfaces qui assurent l'étanchéité entre ces éléments du filtre.

Les dimensions d'une membrane sont donc celles du plateau.

De plus,dans le cas des plateaux chambrés,les membranes sont moulées en forme de cloche pour épouser le fond de la chambre.

Plus rarement,une membrane ne porte ni cannelures,ni pastilles,mais l'on ne peut filtrer du côté où est fixée cette membrane

De plus en plus, les plateaux/cadres et les plateaux chambrés sont fabriqués en polypropylène. Sont connus, des plateaux chambrés en polypropylène, munis d'une membrane en polypropylène moulée en même temps que le plateau et incorporée à lui. Le polypropylène est peu élastique. Les ruptures de membranes sont fréquentes, amenant la perte totale du plateau et de la membrane incorporée.

Cette technique d'incorporation est évidemment inapplicable aux plateaux en acier, fonte ou autre matière.

Les membranes actuelles, dont la périphérie est serrée entre les dites surfaces de contact des plateaux/cadres ou des plateaux chambrés présentent un premier inconvé - nient : elles sont soumises à de rudes efforts répétés de pliage dans les angles, ce qui est une sérieuse cause de rupture. Un second inconvénient majeur de la membrane serrée entre les dites surfaces de contact est qu'elle ne permet pas d'évacuer directement les filtrats ayant traversé les tissus filtrants et entrés dans les cannelures ou les pastilles. Pour permettre cette évacuation, la conception du plateau se complique par des perçages spéciaux ainsi que par découpes dans les membranes et dans les tissus filtrants, ce qui est source d'ennuis.

En général, les plateaux/cadres et les plateaux chambrés ne sont dotés que d'une membrane par plateau.

La présente invention a comme objectifs :

a) d'utiliser des plateaux simples, ne demandant que très peu d'usinage, donc nettement moins coûteux.

b) de supprimer le serrage des membranes entre les surfaces de contact, ce qui donne l'important avantage d'une évacuation directe et rapide des filtrats.

c) d'éviter des ruptures de membranes

d) d'utiliser des plateaux/cadres ou des plateaux chambrés en divers matériaux (aciers, fonte etc) avec membranes.

e) d'éviter toute complication par des perçages supplémentaires dans les plateaux et des découpes des membranes et dans les tissus filtrants.

f) de pouvoir utiliser les membranes sur les deux faces d'un plateau, tant dans le filtre vertical que dans le filtre horizontal.

g) diminuer de moitié environ,les temps de filtration et de compression des gâteaux,par l'emploi de deux tissus et de deux membranes par gâteau.

Ces avantages apparaissent dans la description et par les dessins annexés:

Figure I :Coupe verticale dans un plateau à une membrane suivant l'invention.

Figure II:Coupe verticale dans un plateau à deux membranes.

Figure III: Coupe verticale du dispositif de fixation des membranes.

Figure IV : Coupe verticale dans l'assemblage plateau/cadre et membranes.

Figure V : Coupe verticale dans un plateau et membrane, pour élargir le dispositif de fixation de la membrane.

Figure VI :Coupe verticale dans le cas plateaux/cadres hori zontaux,d'un filtre à axe vertical.

Figure VII: Coupe verticale dans le bas d'un système plateau cadre pour augmenter l'écoulement des filtrats.

Selon Fig I , le plateau 1 porte d'un côté un logement 2 pour la membrane 3. Celle-ci n'a pas les dimensions du plateau,mais est limitée comme le logement 2,aux surfaces de contact 4 entre plateaux/cadres ou plateaux chambrés. Sauf sur sa périphérie,la membrane est cannelée ou "pastillée." Comme son logement 2,la membrane 3 peut être carrée rectangulaire,voire ronde,selon les dimensions et la forme du plateau.Dans le système plateaux/cadres, la membrane 3 est en droite ligne avec les surfaces de contact 4.

S'il s'agit de plateaux chambrés,le seul changement est que le logement 2 est approfondi d'une demi-épaisseur de gâteau filtré,la membrane 3 s'appuyant toujours sur le fond du logement 2. Dans ce cas,elle n'est plus en droite ligne avec les surfaces de contact 4.

Les logements 2 sont moulés en même temps que le plateau, qui de ce fait ne demande . que peu d'usinage.

L'autre côté du plateau est cannelé ou pastillé,par usinage dans la masse,comme pratiqué habituellement.

Au bas du logement 2,une multiplicité de petits conduits 5 amènent les filtrats dans la tuyauterie d'évacuation 6.

- 4 -

0162998

Dans le haut de préférence,de chaque plateau sont percés des conduits 7 aboutissant au logement 2.Par ces conduits est amené dans les intervalles entre les cannelures ou les pastilles,le liquide de lavage des gâteaux qui se répartit dans ces intervalles et peut atteindre ainsi toute la surface du gâteau,assurant un lavage uniforme. La Fig II représente un plateau à deux membranes.Dans le haut ou sur un côté du plateau un conduit 8 amène le fluide sous pression pour l'expansion des membranes 3.

Il est entendu que tout plateau à une ou deux membranes porte à la fois les conduits 7 et 8,jusqu'ici figurés séparément.Les Fig I et II représentent les membranes 3 non fixées.

Le dispositif de fixation de chaque membrane 3 est un encadrement établi à la périphérie de chaque logement 2 et serrant la membrane 3 au fond de son logement,en s'appuyant sur une partie périphérique de la membrane 3 démunie de cannelures ou de pastilles. Voir Fig III.

Chaque dispositif comprend une base 9 en plat de métal ou de polypropylène.Si le plateau 1 est à deux membranes les deux bases 9 des deux dispositifs requis peuvent être reliés par des boulons 10 traversants ou bien chaque dispositif est fixé séparément par des vis non traversantes,comme il sera adopté pour les plateaux à une seule membrane 3.

Sur chaque base 9 sont fixés perpendiculairement des raidisseurs 11,qui forment cannelures supportant les tissus filtrants 12. Les dits raidisseurs qui sont horizontaux sont percés d'une multiplicité de petits trous 13,permettant l'écoulement des filtrats vers le bas,vers les conduits 5 et 6.

Il est évident que les détails de réalisation des dispositifs de fixation des membranes 3 peuvent connaître des alternatives de praticien,mais elles ne sortiraient pas du cadre de l'invention,en appliquant ses principes :

a) ne pas présenter de surface complète plane,sur laquelle viendrait s'appliquer le tissu 12,ce qui conduirait à une perte de surface filtrante.

b) autrement dit,un dispositif de fixation doit réaliser des cannelures pour l'écoulement des filtrats.

c) les parties horizontales de chaque dispositif doivent

**0162998**

permettre l'écoulement vers le bas des filtrats.

Sera donnée plus loin,une alternative au dit dispositif.

La Fig IV représente la combinaison des parties constitutives ci-avant dans le système plateaux/cadres.

Avec des plateaux chambrés,le seul changement est la
profondeur du logement 2,comme indiqué plus haut.

Il y a parfois intérêt à élargir le dispositif de fixation de membrane 3,en creusant un peu plus la périphérie
du logement 2,comme le montre la Fig V.

Dans ce cas,l'on peut admettre l'alternative ci-après de
réalisation du dispositif de fixation d'une membrane.

La base 9 et les raidisseurs 11 sont remplacés par un
seul plat plus épais,dont la surface extérieure est usinée pour constituer des cannelures verticales ou des pastilles.

Les quelques filtres actuels à axe vertical (plateaux
horizontaux) (exemples Brevets américains 3,342,123 et
4,292,173) n'ont qu'un seul tissu filtrant par unité de
filtration (plateau 1 + cadre 15 ou plateaux chambrés.)

La Fig VI représente les éléments horizontaux d'un filtre
à axe vertical,chaque plateau porte deux tissus filtrants
12 utiles et deux membranes 3 suivant l'invention,ce qui
procure l'avantage énorme de doubler la surface de filtra
tion donc de réduire d'environ de moitié le temps de
filtration des gâteaux et de diminuer de même les temps
de compression par les deux membranes, du gâteau 16.

Ces moyens sont applicables au système plateaux/cadres
comme représenté,mais aussi aux plateaux chambrés,en
approfondissant les logements 2,comme indiqué ci-avant.

Ils sont applicables aussi,que le tissu filtrant 12 soit
une bande unique circulant en zig-zag (US. 3,342,123) ou
qu'il y ait une bande continue de tissu par chaque pla -
teau (US 4,292,173). Dans les deux cas,à la fin de la
filtration ou du lavage des gâteaux; du liquide ne sait
pas être évacué normalement par le conduit supplémentaire 17. Il y est remédié en injectant de l'air comprimé
à contre-courant,via ce conduit 17,alimenté par la tuyau
terie à air 18.

Dans des cas de filtration,il arrive que le débit de filtrats est élevé et le gâteau épais.

Pour sortir les filtrats par le plateau,sans exercer de contre pression,la tuyauterie 6 d'évacuation doit avoir un diamètre important.

Celà implique que le plateau soit très épais,ce qui est plus coûteux et augmente la longueur du filtre.

Avec les membranes 3,le problème est solutionné comme suit : le conduit 6 est percé latéralement de chaque côté par une multiplicité de conduits 19 se terminant par des évasements fraisés 20. Chaque cadre 15 contigu possède dans le côté horizontal bas,une multiplicité de conduits 21,se terminant aussi par des évasements 20 et aboutissant à la tuyauterie 22 d'évacuation de filtrats.

Les tissus 12 sont percés au droit des évasements 20,prévus pour que si les tissus se déplacent un peu,la communication reste établie entre les conduits 19 du plateau et les conduits 21 du cadre.

Il apparaît que dans l'état actuel de la technique,il n'a jamais été conçu de filtre-presse du système plateaux/cadres dont les filtrats soient en tout ou partie évacués par les cadres 15.

La ligne des alvéoles 20 dans les plateaux et cadres peut en alternative,être remplacée par une fenêtre 23 sur la largeur utile des plateaux et cadres,les tissus 12 étant découpés au droit et en correspondance avec la dite fenêtre.

REVENDICATIONS.

1.- Membranes cannelées ou pastillées et plateaux pour l'usage de ces membranes dans les filtres-presses, qu'ils soient à plateaux/cadres ou à plateaux chambrés, à axe horizontal (plateaux verticaux) ou à axe vertical (plateaux horizontaux) caractérisés en ce qu'une membrane (3)(FigI) ou deux membranes (3)(Fig II) par plateau(1) ont chacune les dimensions d'un logement (2) limité à l'intérieur de l'encadrement correspondant aux surfaces de contact (4) du plateau (1),chaque membrane (3) étant fixée et serrée à sa périphérie,au fond du logement (2) par un dispositif de fixation formant cannelures pour l'écoulement des filtrats.

2.- Suivant la revendication 1, fixation d'une ou de deux membranes (3) par plateau (1),chacune par un dispositif de fixation en forme de cadre aux dimensions du logement (2) correspondant et serrant la périphérie de chaque membrane (3) caractérisé en ce que chaque dit dispositif comprend une base (9) portant perpendiculairement des raidisseurs (11),dont ceux qui sont horizontaux sont percés d'une multiplicité de trous (13) d'écoulement des filtrats vers le bas.(Fig III).

3.- Suivant la revendication 1,chaque membrane (3) étant à fixer par un dispositif (9-11-13) dans le logement (2) correspondant,caractérisé en ce que ce logement (2) est approfondi à sa périphérie,les raidisseurs (11-13) étant élargis. (Fig V).

4.- Suivant la revendication 1,dans chaque logement (2) approfondi à sa périphérie suivant la revendication 3 le dispositif de fixation de la membrane (3) est en alternative du dispositif suivant revendication 2,caractérisé en ce que les parties constitutives de ce dernier sont remplacées par un cadre en plats de métal ou autre matière rigide plus épais,dans la face extérieure desquels sont usinées des cannelures ou des pastilles.

5.- Chaque plateau (1) suivant revendication 1,pour membrane (3) fixée dans son logement (2) normal ou approfondi est caractérisé en ce que le liquide de lavage des gâteaux filtrés est alimenté dans les cannelures formées par les raidisseurs (11) à trous (13) de chaque dispositif de fixation des membranes (3) et dans les cannelures ou entre les pastilles de ces membranes,par un ou des conduits (7) aboutissant dans le haut de préférence ou sur un côté de chaque logement (2). (Fig IV)

6.-Membranes et plateaux suivant la revendication 1,horizontaux dans un filtre-presse à axe vertical,caractérisés en ce qu'après filtration et après lavage des gâteaux,les filtrats restant au bas du plateau (1) dans les cannelures du dispositif de fixation (9-11-13) et dans les cannelures ou entre les pastilles de la membrane (3) sont expulsés par de l'air comprimé injecté par les conduits (17) et (18) creusés dans le plateau (1).(Fig VI).

7.- Suivant plusieurs des revendications précédentes, plateaux et cadres ,dans le système plateaux/cadres caractérisés en ce que la tuyauterie (6) d'évacuation des filtrats du plateau (1) est percée d'une multiplicité de conduits latéraux (19) avec évasements (20),tandis que le bas correspondant du cadre (15) est percé des deux côtés d'évasements (20) et de conduits (21),en correspondance avec les conduits (19) et aboutissant à la tuyaute-(22) d'évacuation de tout ou partie des filtrats,par le cadre (15),les tissus(12) étant percés de trous correspondant aux évasements (20). (Fig VII)

8.- En alternative de la revendication 7,plateaux et cadres caractérisés en ce que la ligne des évasements (20) est remplacée par une fenêtre (23) suivant la largeur utile tant du plateau (1) que du cadre (15);les tissus (12) étant coupés par une fenêtre correspondant à celle du plateau (1) et à celle du cadre (15).(Fig VII)

FIG I

FIG II

FIG III

FIG Y

FIG. IV

0162998

FIG VI

FIG VII

Office européen
des brevets

**RAPPORT DE RECHERCHE EUROPEENNE**

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| A | FR-A-2 255 092 (KURITA) * Page 6, lignes 19-38; page 7, lignes 1-6; page 8, lignes 7-15; figure 4 * | 1,4,5 | B 01 D 25/12 B 30 B 9/22 |
| | --- | | |
| A | FR-A-2 350 127 (KURITA) * Page 7, lignes 28-38; pages 8-10 * | 1-3 | |
| | --- | | |
| A | FR-A-1 396 352 (BORSIG AG) * Page 3, colonne de droite, lignes 45-57; page 4, colonne de gauche, lignes 1-14; figure 1 * | 1 | |
| | --- | | |
| A | US-A-3 696 930 (TADAO TOKURA) * Colonne 4, lignes 58-68; colonne 5, lignes 1-22 * | 1 | |
| | --- | | **DOMAINES TECHNIQUES RECHERCHES (Int. Cl.4)** |
| A | GB-A-1 102 140 (T. SHRIVER) * Page 3, lignes 90-97 * | 6 | B 01 D B 30 B |
| | --- | | |
| A | US-A-3 342 123 (IVAN SEMENOVICH) * Figure 3 * | 7 | |
| | --- | | |
| A | FR-A-2 444 488 (KURITA) | | |
| | --- | | |
| A | DE-A-1 960 821 (EBERHARD HOESCH) | | |
| | ----- | | |

Le present rapport de recherche a été établi pour toutes les revendications

| Lieu de la recherche LA HAYE | Date d'achèvement de la recherche 08-02-1985 | Examinateur DE PAEPE P.F.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

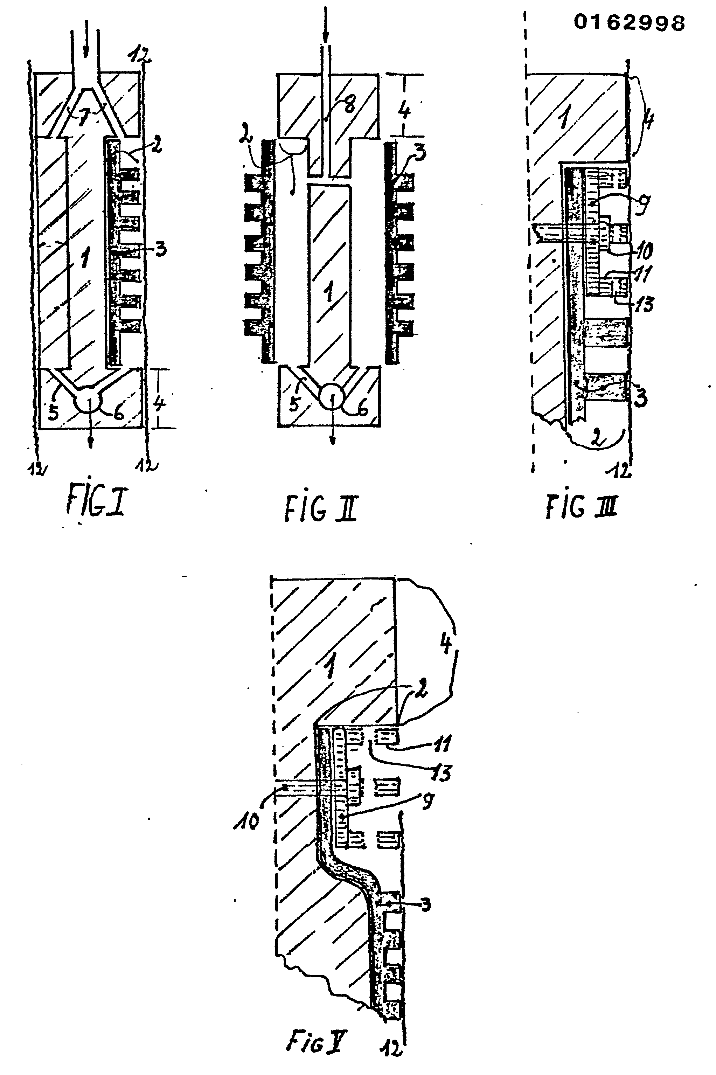

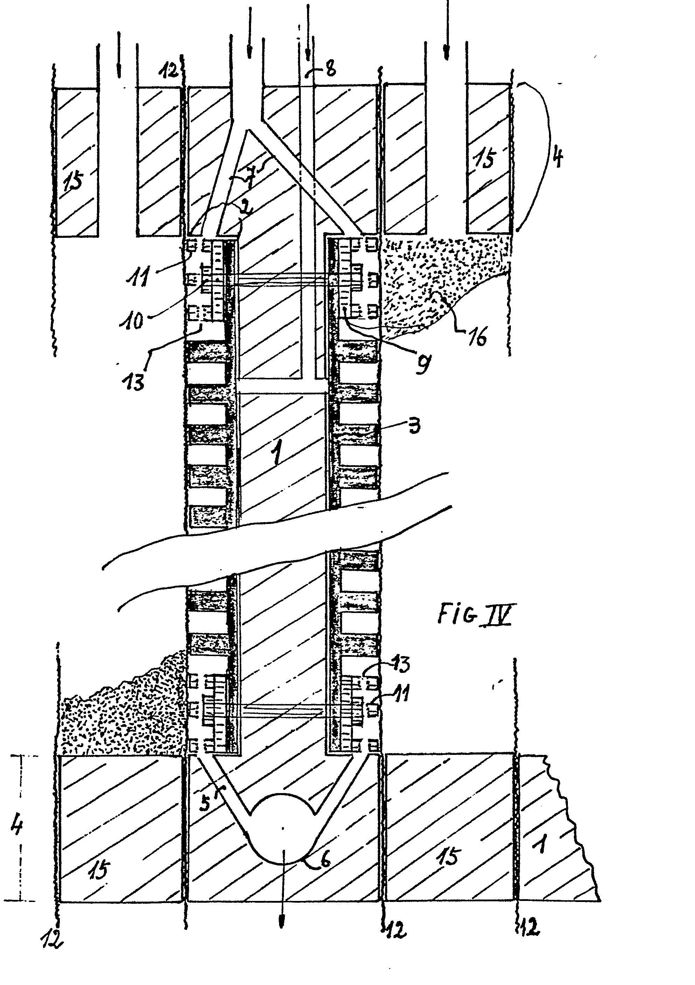

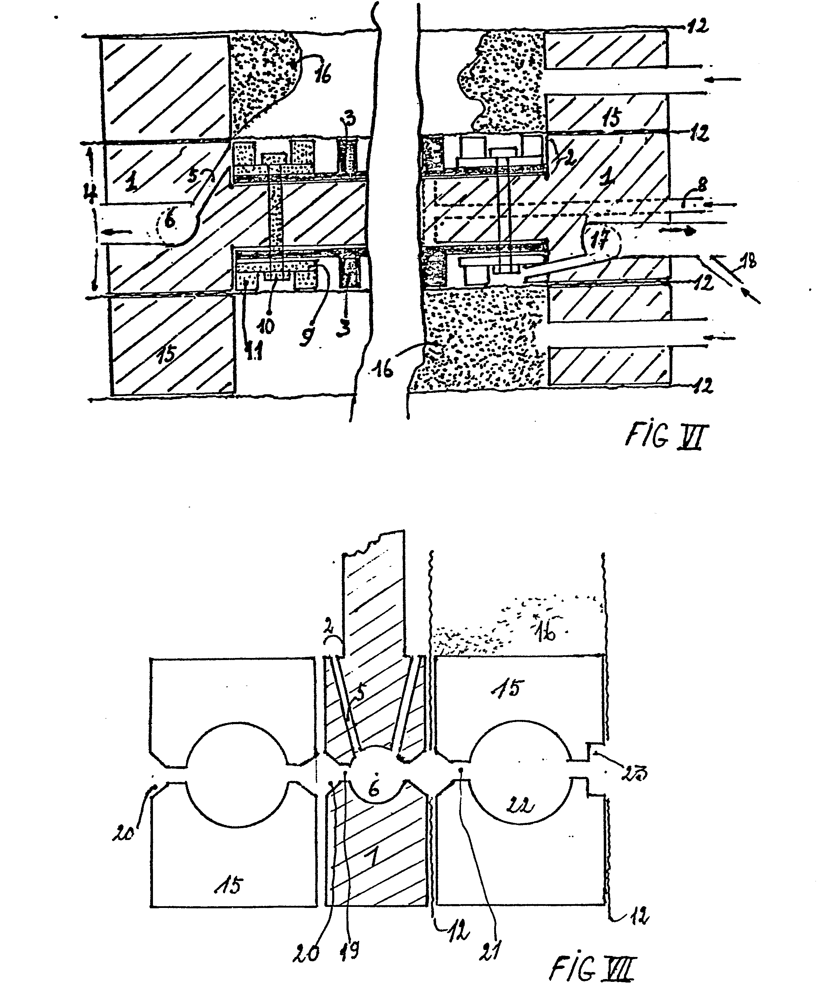

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82